# EUROPÄISCHE PATENTSCHRIFT

(11) **EP 1 832 848 B1**
(45) Veröffentlichungstag und Bekanntmachung des Hinweises auf die Patenterteilung: **11.04.2012**
(21) Anmeldenummer: 07101957.4
(22) Anmeldetag: 08.02.2007
(51) Int. Cl.: G01C 21/36, G08G 1/0969

(54) **Verfahren und Anordnung zur Anzeige eines digitalen Kartenausschnittes**
Method and system for displaying a section of a digital map
Procédé et dispositif destinés à l'affichage d'une section de carte numérique

(30) Priorität: 07.03.2006 DE 102006010480
(43) Veröffentlichungstag der Anmeldung: 12.09.2007
(73) Patentinhaber: ROBERT BOSCH GMBH, 70442 Stuttgart (DE)
(72) Erfinder: Mueller, Mario, 30519, Hannover (DE)

(56) Entgegenhaltungen:
- DE-A1- 4 015 927
- JP-A- 11 304 499
- US-A1- 2003 218 675

## Beschreibung

### Stand der Technik

Die Erfindung betrifft ein Verfahren zur Anzeige eines digitalen Kartenausschnitts in einem Fahrzeug, wobei eine Bildfolge eines Ausschnitts der Fahrzeugumgebung von einer Kamera aufgenommen und von einer Anzeigeeinheit angezeigt wird, und wobei der geographischen Position des Fahrzeugs aus einer digitalen Kartendatenbasis ein digitaler Kartenausschnitt zugeordnet wird, der in die von der Anzeigeeinheit angezeigte Bildfolge eingeblendet wird. Die Erfindung betrifft ferner eine Anordnung, mit der ein derartiges Verfahren durchführbar ist.

Zur Unterstützung der Fahrer von Kraftfahrzeugen ist es bekannt, videobasierte Fahrerassistenzsysteme einzusetzen, die in einem Display von einer Kamera aufgenommene Bilderfolgen anzeigen. Auf diese Weise kann der Fahrer zum Beispiel mit einem Rückfahrkamerasystem bei einem rückwärts ausgeführten Einparkvorgang in der Erkennung von Parklückenbegrenzungen oder Hindernissen unterstützt werden. Auch kann ein in Fahrtrichtung des Fahrzeugs aufgenommenes Video der vor dem Fahrzeug befindlichen Umgebung dem Fahrer als zusätzliche Orientierungshilfe angezeigt werden. Durch den Einsatz von infrarotempfindlichen Bildsensoren, beispielsweise gemäß der WO 2004/047449 A1, kann der Fahrer im Rahmen sogenannter Nightview-Systeme auch bei schlechten Sichtverhältnissen oder Wetterbedingungen wirkungsvoll unterstützt werden. Auch aus der WO 2003/064213 A1 ist ein "automobiles Infrarot-Nachtsichtgerät" bekannt, das ein aufbereitetes Kamerabild des vor dem Fahrer liegenden Bereichs selektiv anzeigt, wobei der ausgewählte Bildausschnitt insbesondere abhängig von der Fahrzeuggeschwindigkeit wählbar ist.

Um den Fahrer bei derartigen Assistenzsystemen noch weiter zu unterstützen ist es ebenfalls bekannt, zusätzliche Informationen zu erzeugen oder abzurufen und diese ergänzend in die von der Bildsensoreinheit aufgenommenen und in der Anzeigeeinheit dargestellten Bilder einzuzeichnen. So können beispielsweise bei einem Nighview-System mit integrierter Fahrspurerkennung die Fahrspur des Fahrzeugs oder bei einem Rückfahrkamerasystem Hilfslinien zur Erleichterung des Einparkvorgangs als zusätzliche Informationen ebenfalls in der Anzeigeeinheit optisch dargestellt werden. Auch können Symbole oder Texte als Zusatzinformationen erzeugt und angezeigt werden. Dabei werden künstlich erzeugte graphische Daten gleichzeitig mit den aufgenommenen Bildern der reellen Umgebung des Fahrzeugs in einer Anzeigeeinheit dargestellt. Als Anzeigeeinheit kann vorzugsweise ein Display oder Monitor dienen.

Außerdem ist es bekannt, in Navigationssystemen neben Fahrempfehlungshinweisen auch digitale Kartenausschnitte anzuzeigen. Diese dienen allgemein dazu, den Fahrer in komplizierten Verkehrssituationen zu entlasten und ihm generell zu einer verbesserten Orientierung zu verhelfen. Besonders deutlich zeigen sich die Vorteile von digitalen Kartenausschnitten bei dicht aufeinanderfolgenden Seitenstraßen im schnell fließenden Verkehr. Dabei kann in Abhängigkeit von einer momentanen geographischen Fahrzeugposition ein aktueller Kartenausschnitt in einem geeigneten Maßstab angezeigt werden.

Die DE 696 26 002 T2 offenbart ferner ein Verfahren und gleichfalls eine zugehörige Anordnung, bei dem bzw. bei der ein Foto in einen zugehörigen Kartenausschnitt bzw. in eine Karte eingeblendet wird. Im Besonderen ist eine Bildverarbeitungsvorrichtung offenbart, die im Stande ist, durch eine elektronische Kamera erlangte Bilddaten von Standbildern und Kartendaten zu verarbeiten, um ein aufgenommenes Bild in Verbindung mit einer Karte anzuzeigen.

Aus der JP-A-05 224 599 ist ferner eine Anordnung mit einer Kamera und einer Fahrzeug-Navigationsvorrichtung bekannt, bei der aufgenommene Fotodaten in einem Monitor angezeigt und in Verknüpfung mit der momentanen geographischen Position des Fahrzeugs entsprechenden Kartendaten gespeichert werden.

Die JP 11304499 offenbart ein Navigationssystem mit einer Kamera und einer Anzeige, wobei die Anzeige Navigationsinformationen und Bildinformationen anzeigt.

Die Dokumente EP-A-1 931 538 und EP-A-1 949 031 sind Stand der Technik nach Artikel 54(3) EPÜ und offenbaren jeweils das Einblenden eines Kartenausschnitts in die Anzeige eines mit einer Kamera aufgenommenen Ausschnitts der Umgebung eines Fahrzeugs, wobei im Kartenausschnitt auch ein Marker angezeigt wird, der der aktuellen geographischen Position des Fahrzeugs entspricht.

Die der vorliegenden Erfindung zugrundeliegende Problematik besteht darin, ein Verfahren sowie eine Anordnung bereitzustellen, das bzw. die es ermöglicht, den Fahrer auf schwierige Fahrsituationen besser vorzubereiten, insbesondere ihm bei geplanten Überholmanövern und vor Einfahrt in scharfe Kurven eine allgemein verbesserte Orientierung im Straßenverkehr zu gewähren.

### Vorteile der Erfindung

Das erfindungsgemäße Verfahren gemäß Anspruch 1 weist gegenüber den bekannten Verfahren und Systemen den Vorteil auf, dass die aufgenommene Bildfolge, also das durch die Kamera erhaltene Videosignal zu der aufgenommenen Fahrzeugumgebung, derart mit einem der aktuellen Position des Fahrzeugs entsprechenden digitalen Kartenausschnitt kombiniert wird, dass beide Informationen vom Fahrer gleichzeitig und auf einer einzigen Anzeigeeinrichtung wahrgenommen werden können. Da der Fahrer auf diese Weise mit einem Blick mehrere Informationen gleichzeitig erfassen kann, resultiert hieraus ein deutlicher Gewinn an Sicherheit für den Fahrer des Fahrzeugs und für andere Verkehrsteilnehmer. Ebenfalls werden diese Vorteile von einer Anordnungen gemäß Anspruch 9 erzielt.

Um den Kartenausschnitt für die Orientierung im Straßenverkehr zu beurteilen, muss der Fahrer den Blick von der Straße abwenden. Durch die Erfindung gelingt es jedoch, dass der Fahrer dem Straßengeschehen, dass durch die angezeigte Bildfolge vermittelt wird, weiterhin zugewandt bleibt und dadurch länger auf die Anzeigeeinrichtung blicken kann, ohne Gefahr zu laufen, unbemerkt in für ihn und andere Verkehrsteilnehmer kritische Verkehrssituationen zu gelangen.

Durch eine gemäß einer Fortbildung der Erfindung geschaffene optische Nähe zum primären Gesichtfeld des Fahrers, etwa indem die Anzeigeeinheit direkt vor dem Fahrer angeordnet ist, wird die sogenannte "eyes off the road time" gegenüber bekannten Navigationseinrichtungen noch weiter reduziert, was die Sicherheit weiter erhöht. Vorzugsweise kann die Anzeigeeinheit in ein Kombiinstrument integriert sein. Vorteilhafte Weiterbildungen und Verbesserungen des erfindungsgemäßen Verfahrens sowie der entsprechenden Anordnung ergeben sich aus den abhängigen Ansprüchen.

So ist es besonders vorteilhaft, die Größe und Position sowie die Transparenz, d.h. den Grad der Bildüberlagerung und des Bildkontrastes des angezeigten Kartenausschnitts und der angezeigten Bildfolge neben der Position des Fahrzeugs auch an weitere Anzeigekriterien zu knüpfen, etwa an die Fahrzeuggeschwindigkeit, Wetterlage, Tageszeit, Kurvenradius und/oder Verkehrsaufkommen, wobei diese Kriterien mittels an sich bekannter Sensorik erfasst und verarbeitet werden können.

Gemäß einer bevorzugten Ausführungsform der Erfindung kann vorgesehen sein, dass der Kartenausschnitt von einer Sendeeinrichtung außerhalb des Fahrzeugs gesendet und von einer Empfangseinrichtung innerhalb des Fahrzeugs empfangen wird. Dadurch ist es möglich, auch aktuelle Verkehrshinweise wie etwa Staumeldungen an die Empfangseinrichtung zu senden und etwa als Warnsymbol in den Kartenausschnitt einzublenden.

Ferner kann der von der Anzeigeeinheit angezeigte Kartenausschnitt in seinem Maßstab vergrößert oder verkleinert dargestellt werden. Insbesondere kann der gewählte Anzeigemaßstab abhängen von der Fahrzeuggeschwindigkeit, wobei bei schneller Fahrt auf der Autobahn vorzugsweise ein größerer Kartenausschnitt in kleinerem Maßstab angezeigt wird. Bei einer Stadtfahrt hingegen ist es hingegen vorteilhaft, einen kleineren Kartenausschnitt in einem größeren Maßstab zu wählen, um auch Nebenstraßen anzeigen zu können.

Zusätzlich oder alternativ dazu kann der von der Anzeigeeinheit angezeigte Kartenausschnitt in seinem Maßstab auch abhängig von der Position des Fahrzeugs und/oder von der Straßenklasse der Straße ist, auf der sich das Fahrzeug befindet vergrößert oder verkleinert werden.

Besonders vorteilhaft ist es ferner, wenn der von der Anzeigeeinheit angezeigte Kartenausschnitt in Abhängigkeit von einer gewählten Fahrzielposition aus der digitalen Datenbasis ausgewählt wird. Insbesondere kann auch hierbei der Maßstab des angezeigten Kartenausschnitts von der Entfernung zum gewählten Fahrziel gewählt werden.

Gemäß einer besonders bevorzugten Ausführungsform der Erfindung ist vorgesehen, dass der von der Anzeigeeinheit angezeigte Kartenausschnitt und/oder die von der Anzeigeeinheit angezeigte Bildfolge transparent oder halbtransparent dargestellt werden. Bei einer derartigen transparenten Überlagerung der Bildfolge durch den Kartenausschnitt kann die Bildfolge in allen wesentlichen Elementen vollständig angezeigt werden. Insbesondere entgegenkommende Objekte wie etwa Fahrzeuge des Gegenverkehrs sollen bevorzugt von der Anzeigeeinrichtung angezeigt werden. Der Transparenzgrad kann dabei vorzugsweise variabel sein, wobei er entweder vom Fahrer wählbar und einstellbar sein kann oder sich automatisch an der Bildhelligkeit orientieren kann.

Insbesondere bei schlechten Sichtverhältnissen, etwa bei Nacht oder im Nebel, bei denen die Kamera das Infrarotspektrum der Umgebung aufnimmt, können zusätzlich eingeblendete und transparent gehaltene digitale Kartenausschnitte zu einer noch sichereren Abschätzung der Verkehrssituation führen.

Besonders vorteilhaft ist es ferner, wenn die Auswahl des anzuzeigenden Kartenausschnitts und/oder die Darstellung des digitalen Kartenausschnitts mittels der Anzeigeeinheit von der aktuellen Orientierung bzw. dem aktuellen Kurswinkel des Fahrzeugs abhängt. So kann der Kartenausschnitt vorzugsweise so eingeblendet werden, dass die die aktuelle Orientierung des Fahrzeugs bestimmende Fahrtrichtung zum oberen Bildrand der angezeigten Bildfolge zeigt.

Weiterhin wird vorgeschlagen, dass sich der digitalen Kartenausschnitt bei einer Bewegung des Fahrzeugs in einer der Fahrzeugbewegung entsprechenden Weise ebenfalls verändert. Der Kartenausschnitt kann beispielsweise verschoben und/oder gedreht werden, wobei dem Fahrer die Orientierung dadurch erleichtert werden kann, dass die Karte stets so angezeigt wird, dass die Fahrtrichtung immer nach oben zeigt. Die Veränderungen in der Darstellung des Kartenausschnitts können insbesondere abhängig von Fahrzeuggeschwindigkeit und Fahrtrichtung sein. Alternativ kann auch die Nordausrichtung des digitalen Kartenausschnitts parallel zu einer Mittelsenkrechten der Anzeigeeinheit verlaufen und, ausgehend von einem unteren Bildrand, zu einem oberen Bildrand der Anzeigeeinheit ausgerichtet sein.

Die Darstellung des digitalen Kartenausschnitts kann vorzugsweise aus der Vogelperspektive stattfinden, aber auch aus der Sicht einer virtuellen Kamera, deren Parameter wie Nick-, Roll- und Wankwinkel, Brennweite, Kamera-Hauptpunkt, Höhe sowie laterale und longitudinale Verschiebung bezüglich des Fahrzeugs auch vom Nutzer frei einstellbar sein könnten. Wenn als Parameter die Parameter der tatsächlich für die Aufnahme der Bildfolge der Fahrzeugumgebung benutzten Kamera eingestellt werden, so kann der Kartenausschnitt auch kontaktanalog in die Bildfolge eingeblendet werden, wobei der eingeblendete Kartenausschnitt unmittelbar mit der angezeigten Bildfolge der Fahrzeugumgebung zur Deckung kommt, sofern sich das Fahrzeug parallel zur Fahrbahn bewegt und die Daten zur geographischen Position des Fahrzeugs hinreichend exakt sind.

Zur Positionsermittlung weist das Fahrzeug vorzugsweise eine Einrichtung für ein Globales-Positionierungs-System (GPS) auf, mittels dessen die geographische Position des Fahrzeugs ausreichend genau ermittelt werden kann.

Ferner kann innerhalb des von der Anzeigeeinheit angezeigten Kartenausschnitts ein zwischen der gegenwärtigen und einer geplanten Fahrzeugposition liegender Streckenabschnitt farblich oder kontrastierend hervorgehoben darstellt werden, um die Orientierung des Fahrers nochmals zu verbessern. So können beispielsweise auch Staus kenntlich gemacht werden.

Besonders vorteilhaft ist es ferner, wenn innerhalb des in die angezeigte Bildfolge eingeblendeten digitalen Kartenausschnitts ein Marker dargestellt wird, der der aktuellen geographischen Position des Fahrzeugs entspricht. Der Marker kann einen Pfeil umfassen, der die momentane Fahrtrichtung des Fahrzeugs anzeigt, so dass der Marker auch die aktuelle Orientierung bzw. den aktuelle Kurswinkel des Fahrzeugs berücksichtigt. Bei einer Bewegung des Fahrzeugs kann sich der Marker innerhalb des Kartenausschnitts und/oder der Kartenausschnitt relativ zum Marker bewegen.

Eine zur Durchführung des erfindungsgemäßen Verfahrens geeignete Anordnung umfasst eine Kamera, mittels der eine Bildfolge eines Ausschnitts der Fahrzeugumgebung aufnehmbar ist, einen Positionsdatenempfänger zum Empfang der geographischen Fahrzeugposition, Mittel zum Extrahieren eines digitalen Kartenausschnitts in Abhängigkeit von der geographischen Fahrzeugposition aus einer Kartendatenbasis, sowie eine Anzeigeeinheit, mittels der die aufgenommene Bildfolge und der digitale Kartenausschnitt anzeigbar sind.

Dabei kann die Kartendatenbasis entweder im Fahrzeug oder außerhalb des Fahrzeugs angeordnet werden. Innerhalb des Fahrzeugs kann die Kartendatenbasis in einer im Fahrzeug montierbaren Speichereinheit gespeichert werden, wobei die Speichereinheit vorzugsweise einen Wechseldatenträger umfasst, so dass Aktualisierung der digitalen Kartendaten durch Auswechseln des Wechseldatenträgers, insbesondere einer Speicherkarte oder einer DVD oder einer CD, leicht vorgenommen werden können.

Ebenso ist es jedoch auch möglich, die Kartendatenbasis außerhalb des Fahrzeugs zu speichern, wobei die Anordnung einen Kartendatenempfänger zum Empfang des von der geographischen Fahrzeugposition abhängigen Kartenausschnitts umfasst. Die offboard befindlichen Kartendaten können insbesondere per Mobilfunk angefragt und empfangen werden.

### Zeichnungen

Nachfolgend wird das erfindungsgemäße Verfahren und die Anordnung anhand eines in den Zeichnungen dargestellten Ausführungsbeispiels näher erläutert. Es zeigt
- Figur 1:: ein Aufbauschema einer erfindungsgemäßen Anordnung zur Anzeige von digitalen Kartenausschnitten in einer Bildfolge;
- Figur 2:: eine Momentaufnahme einer Anzeigeeinheit mit angezeigter Bildfolge und einem darin eingeblendeten Kartenausschnitt; und
- Figur 3:: eine Momentaufnahme einer Anzeigeeinheit mit angezeigter Bildfolge und einem darin transparent eingeblendeten Kartenausschnitt.

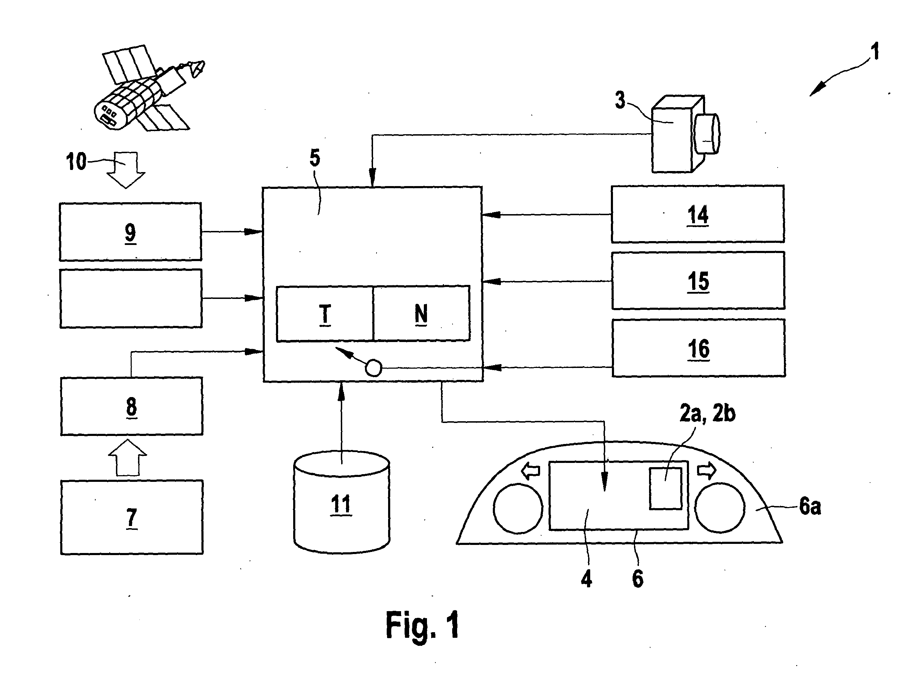

Figur 1 zeigt ein Aufbauschema einer Anordnung 1 zur Einblendung eines digitalen Kartenausschnittes 2a, 2b in eine von einer Kamera 3 aufgenommene Bildfolge 4 der Umgebung eines Fahrzeugs. Mit der Anordnung 1 kann das erfindungsgemäße Verfahren bei einem Kraftfahrzeug im Rahmen eines Nachtsichtsystems ausgeführt werden. Die Anordnung 1 ist prinzipiell auch dazu geeignet, im Fahrzeug integrierte Navigationssysteme oder Nachtsichtsysteme aufzurüsten.

Die Nachtsicht-Kamera 3 ist über ein Nachtsicht-Steuergerät 5 mit einer Anzeigeeinheit 6 verbunden, die an beliebigen Positionen im Fahrzeug angeordnet sein kann, wobei sie jedoch vorzugsweise im Bereich des primären Sichtfeldes des Fahrers sich befindet und in ein Kombiinstrument 6a integriert sein kann. Alternativ kann die Anzeigeeinheit 6 auch unabhängig von einem Nachtsichtsystem ausgeführt sein.

Die Anordnung 1 umfasst weiterhin ein Navigationssystem mit einer Navigationseinheit 7, welche in an sich bekannter Weise Fahrempfehlungsdaten 8 erzeugt, die als Navigationshinweise akustisch und/oder optisch, vorzugsweise ebenfalls in der Anzeigeeinheit 6 ausgegeben werden. Dazu werden die Fahrempfehlungsdaten 8 hier an das Nachtsicht-Steuergerät 5 übergeben. Die Verbindungen können vorzugsweise mittels des im Fahrzeugbau inzwischen standardmäßig verwendeten CAN-Busses (CAN = Controller Area Network) oder mittels eines MOST-Busses (MOST = Media Oriented System Transport) oder auch mittels eines anderen seriellen Feldbussystems ausgeführt sein.
Ferner werden dem Nachtsicht-Steuergerät 5 Informationen zur aktuellen geographischen Fahrzeugposition 9 zugeführt, die insbesondere über GPS-Daten 10 ermittelt und/oder auch vom Navigationssystem zur Verfügung gestellt werden können.

Zusätzlich werden dem Nachtsicht-Steuergerät 5 ebenfalls Datensätze aus einer digitalen Kartendatenbasis 11 zugeführt, die der aktuellen Position des Fahrzeugs zugeordnet sind bzw. zugeordnet werden können, und die Informationen zur Topografie, insbesondere zum Straßenverlauf enthalten.

Zusammen mit den von der Kamera 3 erhaltenen Daten zur Darstellung der ein Video bildenden Bildfolge 4 der Fahrzeugumgebung wird der aus der Katendatenbasis 11 der digitalen Karte generierte digitale Kartenausschnitt 2a, 2b in der Anzeigeeinheit 6 dargestellt. Zusätzlich können auch Fahrempfehlungsdaten 8, Textinformationen, beispielsweise Straßennamen oder Entfernungsangaben, bevorzugt im unteren Bereich oder am Rand der Anzeigeeinheit 6 angezeigt werden.

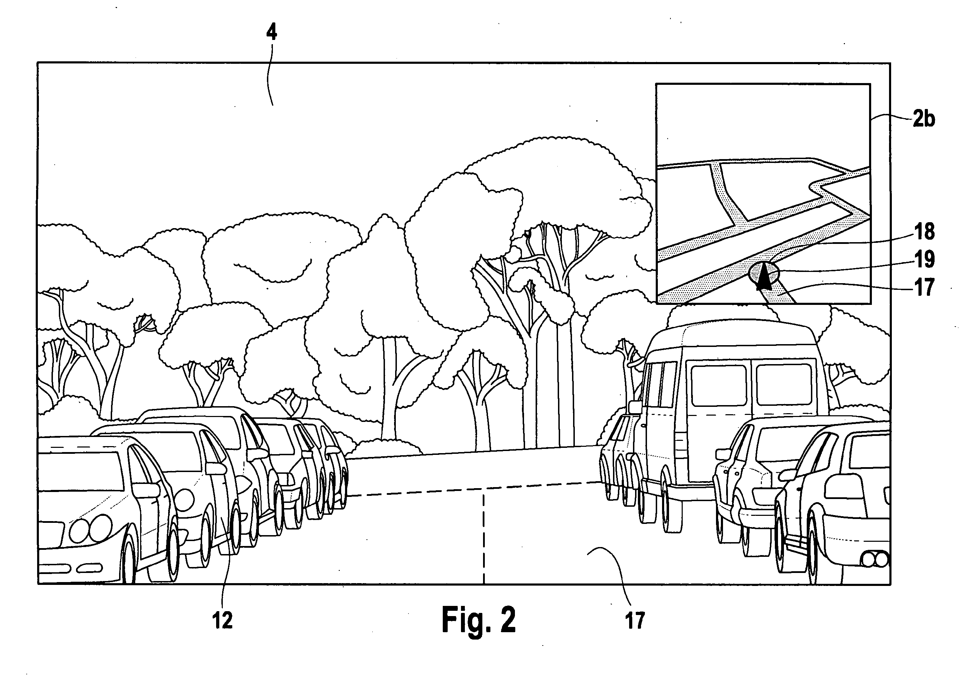

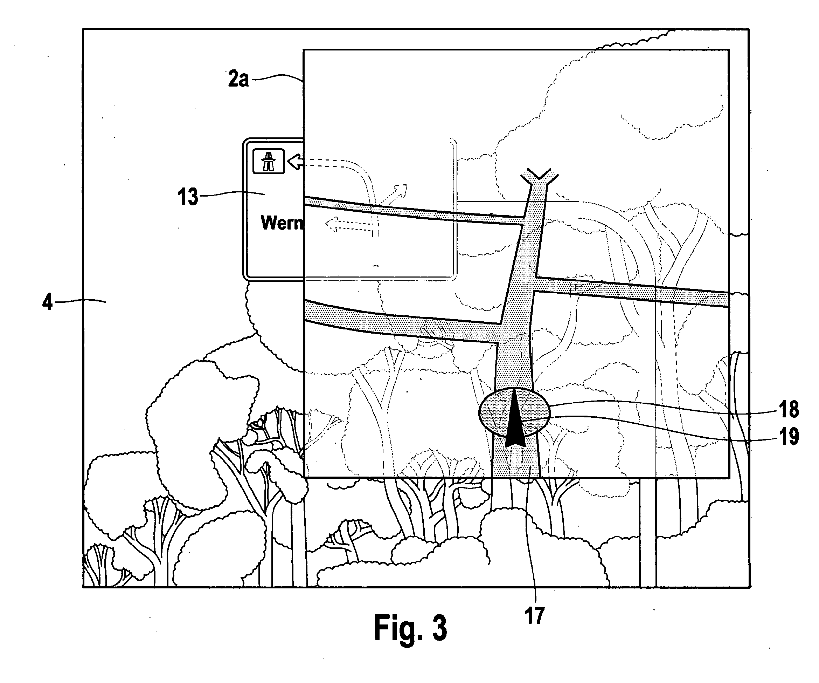

Die Einblendung des digitalen Kartenausschnitts 2a, 2b innerhalb der Anzeige 6 geschieht derart, dass alle bildwesentlichen Elemente der Fahrzeugumgebung, insbesondere sich bewegende oder ruhende Objekte, etwa Fahrzeuge 12 (Figur 2), oder Verkehrsschilder 13 (Figur 3) der Video-Bildfolge 4 noch gut zu erkennen sind. Dies geschieht bevorzugt dadurch, dass der digitale Kartenausschnitt 2a transparent erscheinend in das Video der Fahrzeugumgebung eingeblendet wird und die dortigen Umgebungsbilddaten überlagert (Figur 3). Alternativ kann der Kartenausschnitt 2b auch so weit oben platziert werden, dass er sich zumindest im Normalfall nicht mit relevanten Bilddaten der Fahrzeugumgebung überschneidet (Figur 2).

Weiterhin werden dem Nachtsicht-Steuergerät 5 Geschwindigkeitsdaten 14, Drehzahldaten 15 über die Motordrehzahl sowie Lichtsensordaten oder Zeitangaben 16 zur automatischen Umstellung vom Tagbetrieb T in den Nachtbetrieb N zugeführt und auf an sich bekannte Weise zur Variation der Darstellung in der Anzeigeeinheit 6 weiterbearbeitet. Alternativ oder zusätzlich kann die Bildhelligkeit genutzt werden, um die Darstellung der Anzeigeeinheit 6, insbesondere aber den Grad der Transparenz der eingeblendeten digitalen Kartenausschnitte 2a zu variieren. Auch kann eine manuelle Umstellung zwischen Tagbetrieb T und Nachtbetrieb N sowie weitere manuelle Einstellmöglichkeiten durch den Fahrer vorgesehen sein.

Figur 2 zeigt ein Bild als Teil einer aufgenommenen Bildfolge 4. Zu erkennen ist ein Straßenabschnitt 17 bei Nebel, der links und rechts des Straßenverlaufs von parkenden Fahrzeugen 12 umsäumt ist. Im oberen rechten Bereich des Videobildes ist ein digitaler Kartenausschnitt 2b gezeigt, auf dem die durch einen Marker 18 verdeutlichte Position des eigenen Fahrzeugs innerhalb des Kartenausschnitts 2b zu erkennen ist. Durch einen Pfeil 19 innerhalb des Markers 18 wird verdeutlicht, dass sich das dem Marker 18 zugeordnete hier nicht gezeigte eigene Fahrzeug auf dem Straßenabschnitt 17 befindet und sich auf eine T-Kreuzung zu bewegt.

Figur 3 zeigt einen halbtransparent innerhalb eines weiteren Videobildes eingeblendeten digitalen Kartenausschnitt 2a. Trotz des großflächig eingeblendeten Kartenausschnitts 2a, der eine in Richtung eines Horizontes verlaufenden Straßenabschnitt 17 mit folgenden Abzweigungen nach links und rechts zeigt, sind wesentliche Elemente des überdeckten Videobildbereichs noch ausreichend gut, d.h. ohne Informationsverlust zu erkennen. Insbesondere ein Verkehrsschild 13, was hier die Verkehrsführung zu einer Autobahn anzeigt, ist vom Betrachter mit allen wesentlichen Schildinformationen gut zu erkennen.

## Patentansprüche

1. Verfahren zur Anzeige eines Kartenausschnitts (2a, 2b) in einem Fahrzeug, wobei eine Bildfolge (4) eines Ausschnitts der Fahrzeugumgebung von einer Kamera (3) aufgenommen und mittels einer Anzeigeeinheit (6) angezeigt wird, und wobei der geographischen Position (9) des Fahrzeugs aus einer digitalen Kartendatenbasis (11) ein Kartenausschnitt (2a, 2b) zugeordnet wird, und wobei ein Marker (18) innerhalb des Kartenausschnitts (2a, 2b) angezeigt wird, der der aktuellen geographischen Position und der Orientierung des Fahrzeugs entspricht, **dadurch gekennzeichnet, dass** der Kartenausschnitt (2a, 2b) in die mittels der Anzeigeeinheit (6) angezeigte Bildfolge (4) eingeblendet wird.

2. Verfahren nach Anspruch 1, **dadurch gekennzeichnet, dass** die digitale Kartendatenbasis (11) außerhalb des Fahrzeugs angeordnet ist und dass der Kartenausschnitt (2a, 2b) von einer Sendeeinrichtung außerhalb des Fahrzeugs gesendet und von einer Empfangseinrichtung innerhalb des Fahrzeugs empfangen wird.

3. Verfahren nach Anspruch 1 oder 2, **dadurch gekennzeichnet, dass** der von der Anzeigeeinheit (6) angezeigte Kartenausschnitt (2a, 2b) in seinem Maßstab abhängig von der Fahrzeuggeschwindigkeit (14) vergrößert oder verkleinert dargestellt wird.

4. Verfahren nach mindestens einem der Ansprüche 1 bis 3, **dadurch gekennzeichnet, dass** der von der Anzeigeeinheit (6) angezeigte Kartenausschnitt (2a, 2b) in seinem Maßstab abhängig von der geographischen Position (9) des Fahrzeugs und/oder von der Straßenklasse der befahren Straße (17) vergrößert oder verkleinert dargestellt wird.

5. Verfahren nach mindestens einem der vorherigen Ansprüche, **dadurch gekennzeichnet, dass** der von der Anzeigeeinheit (6) angezeigte Kartenausschnitt (2a, 2b) abhängig von einer gewählten Fahrzielposition aus der Kartendatenbasis (11) ausgewählt wird.

6. Verfahren nach mindestens einem der vorherigen Ansprüche, **dadurch gekennzeichnet, dass** der von der Anzeigeeinheit (6) angezeigte Kartenausschnitt (2a, 2b) und/oder die von der Anzeigeeinheit (6) angezeigte Bildfolge (4) transparent oder teiltransparent dargestellt werden, wobei vorzugsweise der Kartenausschnitt (2a, 2b) der angezeigten Bildfolge (4) halbtransparent überlagert wird.

7. Verfahren nach mindestens einem der vorherigen Ansprüche, **dadurch gekennzeichnet, dass** die Auswahl und/oder die Darstellung des Kartenausschnitts (2a, 2b) von der aktuellen Orientierung des Fahrzeugs abhängt.

8. Verfahren nach mindestens einem der vorherigen Ansprüche, **dadurch gekennzeichnet, dass** der Kartenausschnitt (2a, 2b) bei einer Bewegung des Fahrzeugs entsprechend der Fahrzeugbewegung verändert, insbesondere verschoben und/oder verdreht wird.

9. Anordnung (1) zur Anzeige eines Kartenausschnitts (2a, 2b) in einem Fahrzeug, umfassend eine Kamera (3), mittels der eine Bildfolge (4) eines Ausschnitts der Fahrzeugumgebung aufnehmbar ist, einen Positionsdatenempfänger zum Empfang der geographischen Fahrzeugposition (9), Mittel zum Extrahieren eines Kartenausschnitts (2a, 2b) aus einer digitalen Kartendatenbasis (11) in Abhängigkeit von der geographischen Fahrzeugposition (9), eine Anzeigeeinheit (6), sowie Mittel zur Anzeige eines Markers (18) innerhalb des Kartenausschnitts (2a, 2b), welcher der aktuellen geographischen Position und der Orientierung des Fahrzeugs entspricht, **gekennzeichnet durch** Mittel zum Einblenden des Kartenausschnitts (2a, 2b) in die mittels der Anzeigeeinheit (6) angezeigte Bildfolge (4).

10. Anordnung (1) nach Anspruch 9, **dadurch gekennzeichnet, dass** die Kartendatenbasis (11) in einer innerhalb des Fahrzeugs montierbaren Speichereinheit speicherbar ist, die vorzugsweise einen Wechseldatenträger, insbesondere eine Speicherkarte oder eine DVD oder eine CD umfasst.

11. Anordnung (1) nach Anspruch 10, **dadurch gekennzeichnet, dass** die Kartendatenbasis (11) außerhalb des Fahrzeugs speicherbar ist, wobei die Anordnung einen Kartendatenempfänger zum Empfang des von der geographischen Fahrzeugposition (9) abhängigen Kartenausschnitts (2a, 2b) umfasst.

## Claims

1. Method for displaying a map detail (2a, 2b) in a vehicle, wherein an image sequence (4) from a detail from the vehicle surroundings is recorded by a camera (3) and displayed by means of a display unit (6), and wherein the geographical position (9) of the vehicle is allocated a map detail (2a, 2b) from a digital map database (11), and wherein a marker (18) is displayed within the map detail (2a, 2b), said marker corresponding to the current geographical position and the orientation of the vehicle, **characterized in that** the map detail (2a, 2b) is opened in the image sequence (4) displayed by means of the display unit (6).

2. Method according to Claim 1, **characterized in that** the digital map database (11) is arranged outside the vehicle and **in that** the map detail (2a, 2b) is sent by a transmission device outside the vehicle and is received by a reception device inside the vehicle.

3. Method according to Claim 1 or 2, **characterized in that** the map detail (2a, 2b) displayed by the display unit (6) is presented with its scale enlarged or reduced on the basis of the vehicle speed (14).

4. Method according to at least one of Claims 1 to 3, **characterized in that** the map detail (2a, 2b) displayed by the display unit (6) is presented with its scale enlarged or reduced on the basis of the geographical position (9) of the vehicle and/or on the basis of the road class of the road (17) on which the vehicle is travelling.

5. Method according to at least one of the preceding claims, **characterized in that** the map detail (2a, 2b) displayed by the display unit (6) is selected from the map database (11) on the basis of a chosen travel destination position.

6. Method according to at least one of the preceding claims, **characterized in that** the map detail (2a, 2b) displayed by the display unit (6) and/or the image sequence (4) displayed by the display unit (6) are presented transparently or partially transparently, wherein preferably the map detail (2a, 2b) is superimposed on the displayed image sequence (4) semi-transparently.

7. Method according to at least one of the preceding claims, **characterized in that** the selection and/or the presentation of the map detail (2a, 2b) is dependent on the current orientation of the vehicle.

8. Method according to at least one of the preceding claims, **characterized in that** the map detail (2a, 2b) changes, in particular is shifted and/or rotated, in accordance with the vehicle movement when the vehicle is moving.

9. Arrangement (1) for displaying a map detail (2a, 2b) in a vehicle, comprising a camera (3), which can be used to record an image sequence (4) from a detail from the vehicle surroundings, a position data receiver for receiving the geographical vehicle position (9), means for extracting a map detail (2a, 2b) from a digital map database (11) on the basis of the geographical vehicle position (9), a display unit (6), and means for displaying a marker (18) within the map detail (2a, 2b), which marker corresponds to the current geographical position and the orientation of the vehicle, **characterized by** means for opening the map detail (2a, 2b) in the image sequence (4) displayed by means of the display unit (6).

10. Arrangement (1) according to Claim 9, **characterized in that** the map database (11) can be stored in a memory unit which can be mounted inside the vehicle and which preferably comprises a removable data storage medium, particularly a memory card or a DVD or a CD.

11. Arrangement (1) according to Claim 10, **characterized in that** the map database (11) can be stored outside the vehicle, wherein the arrangement comprises a map data receiver for receiving the map detail (2a, 2b) which is dependent on the geographical vehicle position (9).

## Revendications

1. Procédé d'affichage d'une portion de carte (2a, 2b) dans un véhicule, une séquence d'images (4) d'une portion de l'environnement du véhicule étant enregistrée par une caméra (3) et affichée au moyen d'une unité d'affichage (6) et la position géographique (9) du véhicule étant associée à une portion de carte (2a, 2b) à partir d'une base de données cartographiques numérique (11) et un marqueur (18) qui correspond à la position géographique et à l'orientation actuelles du véhicule étant affiché à l'intérieur de la portion de carte (2a, 2b), **caractérisé en ce que** la portion de carte (2a, 2b) est incrustée dans la séquence d'images (4) affichée moyen de l'unité d'affichage (6).

2. Procédé selon la revendication 1, **caractérisé en ce que** la base de données cartographiques numérique (11) est disposée en dehors du véhicule et **en ce que** la portion de carte (2a, 2b) est envoyée par un dispositif d'émission en dehors du véhicule et reçue par un dispositif de réception à l'intérieur du véhicule.

3. Procédé selon la revendication 1 ou 2, **caractérisé en ce que** l'échelle d'affichage de la portion de carte (2a, 2b) affichée par l'unité d'affichage (6) est agrandie ou réduite en fonction de la vitesse du véhicule (14).

4. Procédé selon au moins l'une des revendications 1 à 3, **caractérisé en ce que** l'échelle d'affichage de la portion de carte (2a, 2b) affichée par l'unité d'affichage (6) est agrandie ou réduite en fonction de la position géographique (9) du véhicule et/ou de la catégorie de route de la route parcourue (17).

5. Procédé selon au moins l'une des revendications précédentes, **caractérisé en ce que** la portion de carte (2a, 2b) affichée par l'unité d'affichage (6) est sélectionnée en fonction d'une position destinataire du véhicule sélectionnée à partir de la base de données cartographiques (11).

6. Procédé selon au moins l'une des revendications précédentes, **caractérisé en ce que** la portion de carte (2a, 2b) affichée par l'unité d'affichage (6) et/ou la séquence d'images (4) affichée par l'unité d'affichage (6) sont représentées de manière transparente ou partiellement transparente, la portion de carte (2a, 2b) étant de préférence superposée avec semi-transparence à la séquence d'images (4) affichée.

7. Procédé selon au moins l'une des revendications précédentes, **caractérisé en ce que** la sélection et/ou la représentation de la portion de carte (2a, 2b) dépendent de l'orientation actuelle du véhicule.

8. Procédé selon au moins l'une des revendications précédentes, **caractérisé en ce que** la portion de carte (2a, 2b) est modifiée lors d'un mouvement du véhicule conformément au mouvement du véhicule, notamment décalée et/ou tournée.

9. Arrangement (1) pour afficher une portion de carte (2a, 2b) dans un véhicule, comprenant une caméra (3) au moyen de laquelle peut être enregistrée une séquence d'images (4) d'une portion de l'environnement du véhicule, un récepteur de données de position pour recevoir la position géographique du véhicule (9), des moyens pour extraire une portion de carte (2a, 2b) à partir d'une base de données cartographiques numérique (11) en fonction de la position géographique du véhicule (9), une unité d'affichage (6) ainsi que des moyens d'affichage d'un marqueur (18) à l'intérieur de la portion de carte (2a, 2b), lequel correspond à la position géographique et à l'orientation actuelles du véhicule, **caractérisé par** des moyens pour incruster la portion de carte (2a, 2b) dans la séquence d'images (4) affichée au moyen de l'unité d'affichage (6).

10. Arrangement (1) selon la revendication 9, **caractérisé en ce que** la base de données cartographiques (11) peut être enregistrée dans une unité de mémoire qui peut être montée à l'intérieur du véhicule, laquelle comprend de préférence un support de données amovible, notamment une carte mémoire ou un DVD ou un CD.

11. Arrangement (1) selon la revendication 10, **caractérisé en ce que** la base de données cartographiques (11) peut être enregistrée en dehors du véhicule, l'arrangement comprenant un récepteur de données cartographiques pour recevoir la portion de carte (2a, 2b) dépendante de la position géographique (9) du véhicule.
